# FASCICULE DE BREVET EUROPEEN

(11) **EP 0 581 674 B1**
(45) Date de publication et mention de la délivrance du brevet: **22.04.1998**
(21) Numéro de dépôt: 93401955.5
(22) Date de dépôt: 27.07.1993
(51) Int. Cl.: G06K 7/08

(54) **Appareil de lecture d'une étiquette magnétique**
Lesevorrichtung für magnetisches Etikett
Reading device for a magnetic label

(30) Priorité: 29.07.1992 FR 9209375
(43) Date de publication de la demande: 02.02.1994
(73) Titulaire: KIOTA INTERNATIONAL, F-13600 La Ciotat (FR)
(72) Inventeur: Martin, Philippe , Cabinet BALLOT-SCHMIT, F-75116 Paris (FR)
(74) Mandataire: Ballot, Paul Denis Jacques

(56) Documents cités:
- EP-A- 0 376 109
- FR-A- 2 393 318
- FR-A- 2 413 723

## Description

L'invention concerne les appareils pour détecter simultanément tous les états magnétiques préalablement enregistrés sur une longueur déterminée de bande magnétique disposée sur un support, en textile notamment.

Les produits qui sont vendus, notamment dans le domaine alimentaire, portent souvent des "étiquettes" constituées de "codes barre" qui définissent certaines caractéristiques des produits tels qu'un numéro d'identification dans une nomenclature, une date de péremption, etc.. Ces étiquettes sont lues par un appareil optique approprié au moment du passage à la caisse du magasin et les informations lues sont utilisées pour déterminer, par exemple, le prix du produit vendu et mettre à jour le stock du magasin.

Ces étiquettes sont en général imprimées directement sur l'emballage du produit, emballage qui présente une certaine rigidité, rigidité facilitant la lecture sans erreur des codes barre de l'étiquette.

De telles étiquettes peuvent également être utilisées pour les vêtements mais elles doivent être portées par l'emballage pour cet aspect rigidité, emballage qui est facilement séparable du vêtement: ce qui peut conduire à des erreurs et à des fraudes.

Il est donc important que l'étiquette soit portée par le vêtement lui-même de manière indétachable mais alors la lecture sans erreur des codes barre, sur le support souple constitué par le textile du vêtement, est difficile.

En outre, il est relativement facile de reproduire de telles étiquettes puisque les codes barre sont par définition visibles, ce qui permet des fraudes sur l'identification, le prix et la marque notamment.

Il a donc été proposé de réaliser de telles étiquettes sous forme de bandes magnétiques qui sont disposées sur un support souple et sont ensuite encodées avec des états magnétiques binaires.

Il est également connu d'utiliser un code magnétique, par exemple sur un chèque, sous forme de bâtonnets magnétiques dont les intervalles représentent un code binaire. FR-A-2393318 décrit un appareil de lecture d'un tel code. L'appareil comprend un nombre de détecteurs magnétiques supérieur au nombre de bâtonnets, ce qui permet de lire le code magnétique de manière statique.

L'invention a pour but de réaliser un appareil de lecture d'une étiquette magnétique constituée d'une bande magnétique encodée qui est disposée sur un support souple, en textile par exemple.

L'invention concerne un appareil de lecture tel que défini à la revendication 1.

D'autres caractéristiques et avantages de la présente invention apparaîtront à la lecture de la description suivante d'un exemple particulier de réalisation, ladite description étant faite en relation avec les dessins joints dans lesquels :

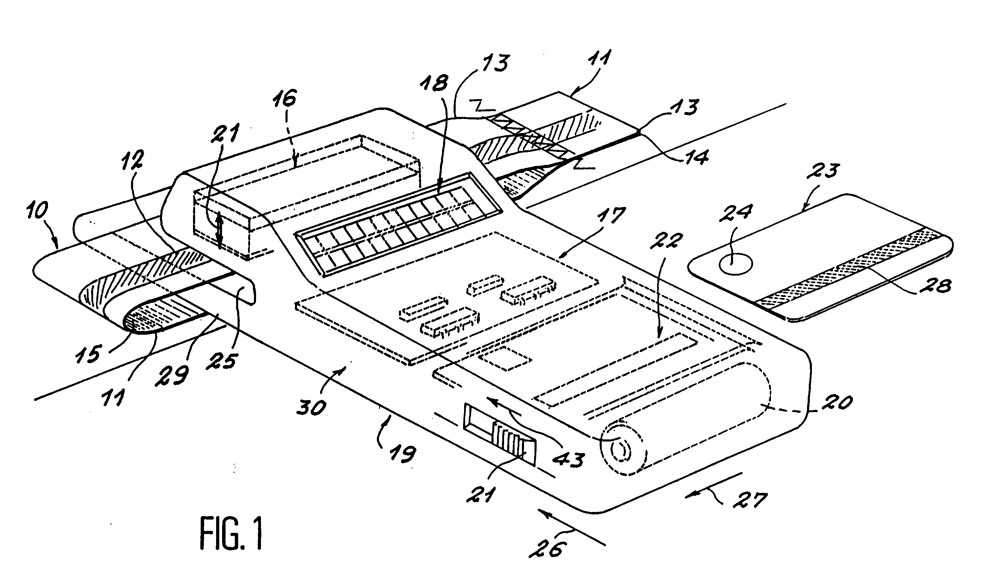

- la Figure 1 représente, en perspective cavalière, un appareil de lecture d'une étiquette magnétique sur support souple selon l'invention;
- la Figure 2a est une vue de face d'une partie d'un premier exemple de réalisation d'un bloc de lecture équipant l'appareil de lecture selon l'invention;
- la Figure 2b est une vue en perspective cavalière, d'une partie du bloc de lecture de la Figure 2a;
- la Figure 3 est une vue de face d'une partie d'un deuxième exemple de réalisation d'un bloc de lecture équipant l'appareil de lecture selon l'invention, et
- la Figure 4 est un schéma théorique montrant de manière schématique les positions des éléments magnétorésistifs du bloc de lecture par rapport aux états magnétiques de la bande magnétique.

Dans les différentes figures, les éléments identiques portent les mêmes références.

L'invention sera décrite dans son application à la lecture d'une étiquette magnétique 10 constituée d'un support souple 11 sur laquelle est disposée une bande magnétique 12. Par exemple, le support souple est une languette de textile de largeur égale à 20 millimètres sur laquelle a été déposée, par un procédé de transfert à chaud, une bande magnétique ayant une largeur égale à 6,25 millimètres.

La bande magnétique 12 est encodée de manière à enregistrer dans le sens de sa longueur un certain nombre d'informations sous forme d'états magnétiques telles que la marque du fabricant, le type de vêtement, sa taille et sa couleur.

L'étiquette magnétique est cousue sur le vêtement par ses deux extrémités 13 et 14 accrochées l'une à l'autre de manière à réaliser une boucle 15 qui présente la bande magnétique 12 sur sa partie externe.

L'appareil de lecture 30, selon l'invention, d'une telle étiquette magnétique 10 comprend principalement un bloc de détection (dit aussi de lecture) 16 des états magnétiques de la bande qui fournit des signaux électriques à un circuit électronique de traitement 17 des signaux électriques fournis par le bloc de détection 16 et un dispositif d'affichage 18 en clair des informations enregistrées sous forme d'états magnétiques. Ces trois éléments de base 16, 17 et 18 sont disposés sur un même support en forme de boîte 19 qui peut, de préférence, être facilement appréhendée par une main humaine.

La boîte 19 sert également de réceptacle à une source d'énergie électrique incorporée, telle qu'une pile 20. Elle comporte également au moins un bouton de commande 21 pour alimenter en énergie électrique les trois éléments 16, 17 et 18 ainsi que tout autre élément additionnel.

Parmi les éléments additionnels qui peuvent compléter les trois éléments de base 16, 17 et 18 sont un dispositif de déplacement (non représenté) du bloc de détection 16 dans les sens indiqués par la double flèche 21 et un dispositif de lecture 22 d'une carte 23 avec une bande magnétique 28 ou, de préférence, avec un circuit intégré 24.

Par ce dispositif de déplacement du bloc de détection 16, ce dernier coopère avec une plaque 25 qui prolonge la boîte 19 sous le bloc 16 et au-delà. Cette plaque 25 permet d'emmancher l'appareil 30 dans la boucle 15 de l'étiquette 10 (flèche 26), supposée fixée au vêtement, et d'amener la bande magnétique 12 entre le bloc détection 16 et la plaque 25. Dans cette position, l'utilisateur de l'appareil 30, en maniant le bouton de commande 21, abaisse le bloc de détection 16 contre la bande magnétique 12, ce qui permet la détection des états magnétiques.

Afin de faire coïncider les emplacements des états magnétiques sur la bande magnétique 12 avec ceux des éléments de détection du bloc 16, l'utilisateur de l'appareil 30 déplace ce dernier dans le sens de la flèche 27 pour amener le bord 29 de la plaque 25 dans la partie arrondie de la boucle 15.

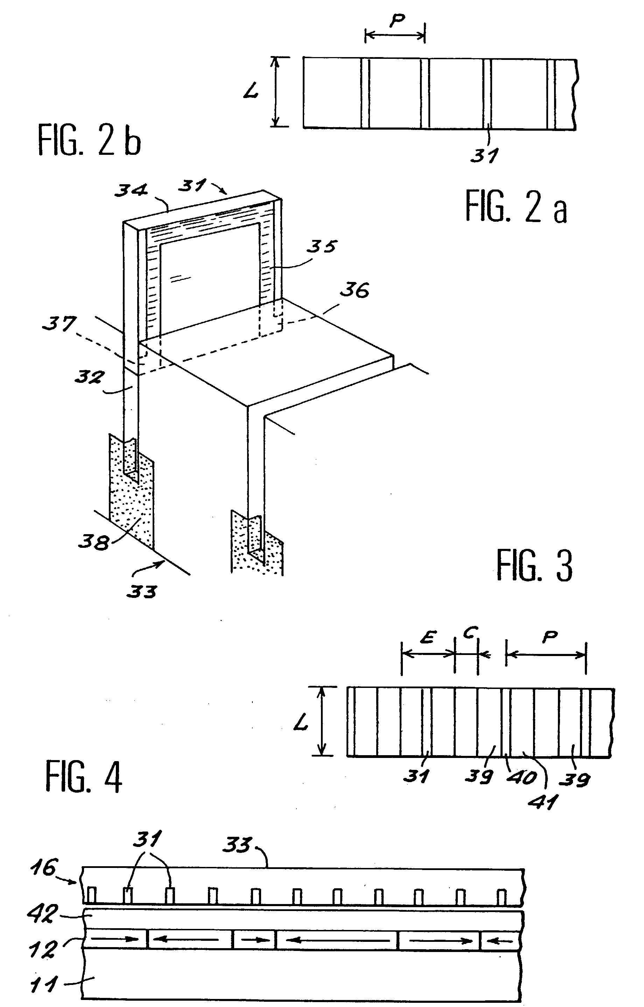

Le bloc de détection 16 des états magnétiques de la bande magnétique 12 peut être réalisé de différentes manières et deux d'entre elles seront décrites en relation avec les figures 2 et 3. Quel que soit le mode de réalisation, ceux qui seront décrits ci-après ou tous autres, le bloc de détection comprendra une pluralité d'éléments unitaires de détection juxtaposés les uns aux autres suivant un pas d'espacement qui correspondra à celui des états magnétiques élémentaires de la bande. Le nombre de ces éléments unitaires sera égal à celui des états magnétiques élémentaires à détecter sur la bande, par exemple N=16.

Sur les Figures 2a et 2b, les éléments unitaires de détection sont des magnétorésistances 31 qui sont montées dans des encoches 32 d'un bloc 33 en matériau amagnétique, par exemple de la céramique. Chaque magnétorésistance 31 est constituée d'une lame 34 ou substrat en matériau amagnétique tel que du silicium sur laquelle est déposée une boucle magnétorésistive 35 dont les extrémités 36 et 37 viennent en contact, au fond de l'encoche 32 avec des dépôts métalliques 38 réalisés sur les faces latérales du bloc 33 et dans le fond des encoches.

A titre indicatif, le bloc 33 a une largeur L de 3 millimètres et le pas d'espacement P des magnétorésistances est également de 3 millimètres, chaque magnétorésistance ayant une épaisseur de quelques dixièmes de millimètres.

La Figure 3 est une vue de face d'un bloc de détection analogue à celui décrit en relation avec la Figure 2, mais comportant des éléments intercalaires complémentaires entre les éléments magnétorésistifs 31 en vue d'améliorer ou de faciliter la détection des états magnétiques de la bande. Ces éléments intercalaires complémentaires consistent en une paire de pièces magnétiques polaires 39 et 40, qui sont disposées de part et d'autre de chaque élément magnétorésistif 31. Les pièces polaires 39 et 40 qui sont à proximité l'une de l'autre entre deux éléments magnétorésistifs, sont séparées par une couche 41 de matériau amagnétique, de la céramique par exemple, qui constitue le matériau de base ou structurel du bloc de détection comme dans le mode de réalisation de la Figure 2.

A titre indicatif, l'ensemble des pièces polaires 39 et 40 qui flanquent l'élément magnétorésistif 31 a une épaisseur E de deux millimètres environ tandis que la couche amagnétique 41 a une épaisseur C d'un millimètre, ce qui donne un pas d'écartement P de trois millimètres environ entre chaque élément magnétorésistif comme dans le mode de réalisation de la Figure 2. La largeur L du bloc est également de trois millimètres.

La Figure 4 montre en coupe longitudinale de manière théorique et schématique les positions des éléments magnétorésistifs 31 du bloc de détection 16 par rapport aux états magnétiques de la bande 12 représentés par des flèches dirigées vers la droite pour désigner conventionnellement des états binaires "0" et vers la gauche pour désigner conventionnellement des états binaires "1". Avec cette convention, le code binaire enregistré dans la partie de bande représentée sur la Figure 4 est 00110111001 pour onze états magnétiques juxtaposés.

Sur la Figure 4, la bande magnétique 12 est recouverte d'une couche 42 qui est interposée entre la bande 12 et le bloc de détection 16. Une telle couche n'est pas nécessaire mais sa présence est recommandée pour obtenir certains effets spéciaux. Ainsi, elle peut avoir dans tous les cas un rôle de protection mécanique et chimique. Elle peut être de différentes couleurs, chaque couleur désignant une caractéristique particulière du produit étiqueté. Elle peut être en matériau amagnétique ou magnétique et, dans ce dernier cas, elle constitue avec la bande magnétique 12 un ensemble magnétique bicouche, chaque couche ayant un champ coercitif différent, en vue d'applications particulières du genre de celles décrites dans la demande de brevet français n° 92 03388 déposée le 20 mars 1992, publiée sous le numéro 2688907 et intitulée "PROCEDE D'ENREGISTREMENT ET DE LECTURE D'UNE BANDE MAGNETIQUE BICOUCHE ET SYSTEME DE MISE EN OEUVRE".

D'une manière générale, le champ coercitif de la bande magnétique 12 doit être très élevé, de l'ordre de 4.000 oersteds alors que les bandes magnétiques usuelles du commerce ont un champ coercitif de quelques centaines d'oersteds, ceci afin de protéger les états magnétiques enregistrés entre les effets de champs magnétiques perturbateurs et les tentatives de fraudes.

Le fonctionnement et la procédure de mise en oeuvre de l'appareil de lecture selon l'invention sont les suivants en vue de lire une étiquette magnétique 10. La boucle 15 de l'étiquette 10 est écartée pour permettre l'insertion (flèche 26) de la plaque 25 de manière que l'étiquette vienne se placer sous le bloc de détection 16, ce dernier étant en position haute. Par ailleurs, l'appareil est déplacé vers la gauche (flèche 27) pour que la plaque 25 vienne en contact avec le bord de la boucle 15. Dans cette position, l'utilisateur manoeuvre le bouton de commande 21 dans le sens de la flèche 43, ce qui a pour effet d'alimenter en énergie électrique les différents éléments tels que le bloc de détection 16, le dispositif de déplacement (non représenté) de ce dernier, le circuit électronique de traitement 17 et le dispositif d'affichage 18. L'alimentation du dispositif de déplacement provoque le mouvement du bloc de détection 16 vers le bas de manière à coincer la bande magnétique 12 et son support 11 entre la plaque 25 et le bloc de détection 16.

Après un certain laps de temps de temporisation dans cette position, un signal électrique élaboré par le circuit électronique de traitement 16 provoque la détection des états magnétiques et le traitement des signaux électriques correspondant à ces états de manière à afficher sur le dispositif d'affichage 18 leur signification.

Après lecture de cette signification, l'utilisateur peut relâcher le bouton de commande 21, ce qui coupe l'alimentation électrique et termine l'opération de lecture de l'étiquette.

Selon les applications envisagées, le dispositif d'affichage 18 montre, par exemple, le nom du fabricant, et/ou du vendeur, le type de vêtement, le numéro d'identification, le prix, etc..

Cette lecture de la bande magnétique 12 peut être combinée, dans le circuit électrique de traitement 17, avec celle des informations contenues dans la carte 23 qui est alors introduite dans le lecteur 22.

Dans un cas simple, le circuit électronique de traitement 17 effectue la comparaison, dans un comparateur, entre les noms du fabricant et du vendeur lus sur la bande magnétique et ceux fournis par la carte 23 et indique le résultat de cette comparaison, c'est-à-dire l'absence de fraude lorsqu'il y a concordance ou de fraude s'il n'y a pas concordance.

La comparaison peut aussi s'effectuer entre des dates limites de vente autorisée en fonction de la collection concernée, ces dates limites pouvant être modifiées sur la carte 23 ou par fourniture d'une autre carte avec d'autres dates.

L'invention a été décrite avec un bloc de détection 16 du type à magnétorésistances mais l'invention peut également être mise en oeuvre avec un bloc de détection du type à effet HALL.

L'invention a été décrite dans son application à la lecture d'une étiquette magnétique en forme de boucle dans laquelle est inséré l'appareil selon l'invention mais l'invention peut également être mise en oeuvre avec une étiquette magnétique qui ne serait pas en forme de boucle et qui serait constituée par une languette. Dans ce cas, le positionnement de l'étiquette magnétique et du bloc de détection peuvent se faire par rapport à la couture de l'étiquette sur le vêtement, que cette étiquette soit cousue sur une extrémité ou sur les deux extrémités.

Dans l'exemple de réalisation qui a été décrit, la bande magnétique est disposée sur la face extérieure de la boucle 15 mais elle peut être disposée sur la face intérieure de cette boucle. Dans cette disposition, l'appareil de lecture 30 doit être retourné sens dessus dessous pour que la tête de lecture 21 puisse venir en contact avec la bande magnétique 12. Cependant, un tel retournement n'est pas nécessaire si la languette de textile est de faible épaisseur : le signal lu sera seulement d'amplitude plus faible que lors d'un contact direct de la tête de lecture sur la bande magnétique.

La bande magnétique 12 est, de préférence, encodée sur une longueur au plus égale à la moitié de la longueur de la boucle et correspondant à l'intervalle entre la couture aux extrémités 13 et 14 et le pli de la boucle 15.

La largeur de la bande magnétique 12 doit être suffisamment large pour que la lecture simultanée de tous les états magnétiques puisse s'effectuer sans erreur même si la tête de lecture 21 n'est pas parfaitement alignée avec la bande.

L'invention a été décrite dans le cas d'un support de bande magnétique qui est suffisamment souple pour permettre la réalisation d'une boucle. Cependant, l'invention s'applique aussi au cas où la bande magnétique 12 est disposée sur un support rigide tel qu'une couverture rigide de livre; la mise en place de la tête de lecture par rapport à la bande peut alors être repérée par le ou les bords de la couverture du livre.

## Revendications

1. Appareil de lecture d'une étiquette magnétique (10) constituée d'une bande magnétique (12) qui est disposée sur au moins une face d'un support (11) et qui est encodée suivant une longueur déterminée selon un nombre déterminé N de zones ayant chacune un état magnétique, ledit appareil étant caractérisé en ce qu'il comprend :
- un premier moyen (16) constitué d'un bloc de détection formé de N détecteurs élémentaires juxtaposés (31) pour détecter simultanément les N états magnétiques encodés sur ladite bande magnétique (12) en plaçant chaque détecteur élémentaire en regard d'une desdites zones et pour fournir N signaux électriques représentatifs desdits N états magnétiques,
- un second moyen électronique (17) pour traiter lesdits signaux électriques représentatifs afin de déterminer la signification desdits états magnétiques,
- un troisième moyen (18) pour afficher la signification desdits états magnétiques, et
un quatrième moyen sur lequel est monté ledit bloc de détection pour déplacer ledit bloc de détection dans un sens tel qu'il vient pincer ladite bande magnétique (12) sur une plaque (25) solidaire dudit boîtier (19).

2. Appareil de lecture selon la revendication 1, caractérisé en ce que les premier (16), deuxième (17), troisième et quatrième moyens (18) sont disposés dans un même boîtier (19) qui est manipulable par une main humaine de manière à mettre ledit premier moyen (16) de détection des états magnétiques en contact avec ladite bande magnétique (12).

3. Appareil de lecture selon la revendication 1 ou 2, caractérisé en ce que chaque détecteur élémentaire est constitué par une boucle magnétorésistive (35).

4. Appareil de lecture selon la revendication 3, caractérisé en ce que chaque boucle magnétorésistive (31) est séparée de la suivante par une couche en matériau amagnétique.

5. Appareil de lecture selon la revendication 3, caractérisé en ce que chaque boucle magnétorésistive (31) est flanquée de deux pièces polaires magnétiques (39, 40), les pièces polaires magnétiques adjacentes entre deux boucles magnétorésistives consécutives étant séparées par une couche (41) en matériau amagnétique.

6. Appareil de lecture selon la revendication 4 ou 5, caractérisé en ce que le matériau amagnétique est de la céramique.

7. Appareil de lecture selon l'une des revendications précédentes, caractérisé en ce qu'il comprend, en outre,
- un cinquième moyen (22) pour lire des informations enregistrées dans une carte à mémoire (23).
- un sixième moyen pour comparer les informations lues dans ladite carte à mémoire avec celles lues sur ladite bande magnétique (12) et fournir une information de concordance ou non qui est affichée par ledit troisième moyen (18).

8. Système de lecture comprenant un appareil de lecture selon l'une des revendications précédentes 1 à 7 et une étiquette magnétique (10), caractérisé en ce que le système comprend, en outre :
- un septième moyen (10;25) pour positionner ledit premier moyen (16) par rapport aux positions des états magnétiques encodés sur ladite bande.

9. Système de lecture selon la revendication 8, caractérisé en ce que le septième moyen est constitué par la combinaison d'une forme en boucle (15) de l'étiquette magnétique et de ladite plaque (25) dont un bord (29) vient en contact avec un pli de la boucle par rapport auquel les positions des états magnétiques sont déterminées.

10. Système de lecture selon la revendication 9, caractérisé en ce que sur l'étiquette magnétique en forme de boucle, les états magnétiques sont encodés sur une longueur au plus égale à la moitié de celle de la boucle.

11. Système de lecture selon la revendication 10, caractérisé en ce que la bande magnétique (12) est disposée à l'extérieur de la boucle.

12. Système de lecture selon la revendication 10, caractérisé en ce que la bande magnétique (12) est disposée à l'intérieur de la boucle.

## Patentansprüche

1. Vorrichtung zum Lesen eines magnetischen Etiketts (10), gebildet aus einem Magnetband (12), das an mindestens einer Fläche eines Trägers (11) angeordnet ist und das gemäß einer bestimmten Länge entsprechend einer bestimmten Anzahl (N) von Bereichen, die jeweils einen magnetischen Zustand aufweisen, codiert ist,
dadurch gekennzeichnet, daß die Vorrichtung aufweist:
- Eine erste Einrichtung (16), gebildet aus einem Abfühlblock, gebildet aus N elementaren nebeneinanderliegenden Detektoren (31), um gleichzeitig die N magnetischen Zustände abzufühlen, die auf dem Magnetband (12) codiert sind, indem jeder elementare Detektor gegenüber einem der Bereiche plaziert wird, und um N elektrische Signale bereitzustellen, die für die N magnetischen Zustände repräsentativ sind,
- eine zweite elektronische Einrichtung (17), um die repräsentativen elektrischen Signale zu verarbeiten, um die Bedeutung der magnetischen Zustände zu bestimmen,
- eine dritte Einrichtung (18), um die Bedeutung der magnetischen Zustände anzuzeigen und
- eine vierte Einrichtung, an der der Abfühlblock angebracht ist, um den Abfühlblock in einer Richtung zu verlagern, so daß er das Magnetband (12) an eine Platte (25) klemmt, die mit dem Gehäuse (19) fest verbunden ist.

2. Lesevorrichtung nach Anspruch 1,
dadurch gekennzeichnet, daß die erste (16), zweite (17) dritte und vierte Einrichtung (18) in ein und demselben Gehäuse (19) angeordnet sind, das durch eine menschliche Hand betätigt werden kann, so daß die erste Einrichtung (16) zum Abfühlen der magnetischen Zustände mit dem Magnetband (12) in Kontakt kommt.

3. Lesevorrichtung nach Anspruch 1 oder 2,
dadurch gekennzeichnet, daß jeder elementare Detektor durch eine magnetoresistive Schleife (35) gebildet ist.

4. Lesevorrichtung nach Anspruch 3,
dadurch gekennzeichnet, daß jede magnetoresistive Schleife (31) von der folgenden durch eine Schicht aus nichtmagnetischem Material getrennt ist.

5. Lesevorrichtung nach Anspruch 3,
dadurch gekennzeichnet, daß jede magnetoresistive Schleife (31) von zwei magnetischen Polschuhen (39, 40) flankiert ist, wobei die zwischen zwei aufeinanderfolgenden magnetoresistiven Schleifen angrenzenden magnetischen Polschuhe durch eine Schicht (41) aus nichtmagnetischem Material getrennt sind.

6. Lesevorrichtung nach Anspruch 4 oder 5,
dadurch gekennzeichnet, daß das nichtmagnetische Material Keramik ist.

7. Lesevorrichtung nach einem der vorhergehenden Ansprüche,
dadurch gekennzeichnet, daß sie ferner umfaßt:
- eine fünfte Einrichtung (22), um in einer Speicherkarte (23) gespeicherte Informationen zu lesen.
- eine sechste Einrichtung, um die aus der Speicherkarte gelesenen Informationen mit den auf dem Magnetband (12) gelesenen Informationen zu vergleichen und um eine Information der Übereinstimmung oder Nichtübereinstimmung bereitzustellen, die durch die dritte Einrichtung (18) angezeigt wird.

8. Lesesystem, umfassend eine Lesevorrichtung nach einem der vorhergehenden Ansprüche 1 bis 7 und ein magnetisches Etikett (10),
dadurch gekennzeichnet, daß das System ferner umfaßt:
- eine siebte Einrichtung (10; 25), um die erste Einrichtung (16) in bezug auf die Positionen der auf dem Band codierten magnetischen Zustände zu positionieren.

9. Lesesystem nach Anspruch 8,
dadurch gekennzeichnet, daß die siebte Einrichtung durch die Kombination einer Schleife (15) des magnetischen Etiketts und der Platte (25) gebildet ist, deren einer Rand (29) mit einer Falte der Schleife in Kontakt kommt, in bezug auf welche die Positionen der magnetischen Zustände bestimmt sind.

10. Lesesystem nach Anspruch 9,
dadurch gekennzeichnet, daß auf dem magnetischen Etikett in Form einer Schleife die magnetischen Zustände auf einer Länge codiert sind, die möglichst gleich der Mitte der Länge der Schleife ist.

11. Lesesystem nach Anspruch 10,
dadurch gekennzeichnet, daß das Magnetband (12) außerhalb der Schleife angeordnet ist.

12. Lesesystem nach Anspruch 10,
dadurch gekennzeichnet, daß das Magnetband (12) innerhalb der Schleife angeordnet ist.

## Claims

1. A machine for reading a magnetic label (10) consisting of a magnetic stripe (12) which is arranged on at least one face of a medium (11) and which is encoded to a given length with a predetermined number (N) of fields, each of which has a magnetic state, said machine being characterised in that it comprises:
- a first means (16) consisting of a unit made up of N juxtaposed elementary detectors (31) for the purpose of simultaneously detecting the N magnetic states encoded on said magnetic stripe (12) when each elementary detector is positioned facing one of said fields, and in order to supply N electric signals representative of said magnetic states,
- a second electronic means (17) for processing said electric signals (17) in order to determine the meaning of said magnetic states,
- a third means (18) for displaying the meaning of said magnetic states and
- a fourth means on which said detector unit is mounted so that said detector unit can be moved in a direction such that it can clamp said magnetic stripe (12) on a plate (25) joined to said housing (19).

2. A reader as claimed in claim 1, characterised in that the first (16), second (17), third and fourth means (18) are arranged in a same housing (19) which can be manually operated so that said first means (16) for detecting the magnetic states can be placed in contact with said magnetic stripe (12).

3. A reader as claimed in claim 1 or 2, characterised in that each elementary detector is a magneto-resistive loop (35).

4. A reader as claimed in claim 3, characterised in that each magneto-resistive loop (31) is separated from the subsequent one by means of a layer of non-magnetic material.

5. A reader as claimed in claim 3, characterised in that each magneto-resistive loop (31) is flanked by two magnetic polar elements (39, 40) and the adjacent magnetic polar elements between two consecutive magneto-resistive loops are separated by a layer (41) of a non-magnetic material.

6. A reader as claimed in claim 4 or 5, characterised in that the non-magnetic material is ceramic.

7. A reader as claimed in one of the preceding claims, characterised in that it also has
- a fifth means (22) for reading the data recorded in a memory card (23),
- a sixth means for comparing the data read from said memory card with those read from said magnetic stripe (12) and supplying information as to whether what is read agrees or not with what is displayed by the third means (18).

8. A reader system consisting of a machine as claimed in one of the preceding claims 1 to 7 and a magnetic label (10), characterised in that the system also has:
- a seventh means (10; 25) for positioning said first means relative to the positions of the magnetic states encoded on said stripe.

9. A reader system as claimed in claim 8, characterised in that the seventh means comprises the combination of a magnetic label in the form of a loop (15) and said plate (25), one edge (29) of which comes into contact with a fold of the loop relative to which the positions of the magnetic states are determined.

10. A reader system as claimed in claim 9, characterised in that the magnetic states are encoded on the loop-shaped magnetic label over a length at least equal to half that of the loop.

11. A reader system as claimed in claim 10, characterised in that the magnetic stripe (12) is arranged on the exterior of the loop.

12. A reader system as claimed in claim 10, characterised in that the magnetic stripe (12) is arranged on the interior of the loop.
